# EUROPEAN PATENT SPECIFICATION

(11) **EP 1 151 431 B1**
(45) Date of publication and mention of the grant of the patent: **06.10.2004**
(21) Application number: 00914515.2
(22) Date of filing: 04.02.2000
(51) Int. Cl.: G10L 15/22, G10L 15/00

(54) **METHOD AND APPARATUS FOR TESTING USER INTERFACE INTEGRITY OF SPEECH-ENABLED DEVICES**
VERFAHREN UND VORRICHTUNG ZUR INTEGRITÄTSPRÜFUNG VON BENUTZEROBERFLÄCHEN SPRACHGESTEUERTER GERÄTE
PROCEDE ET APPAREIL PERMETTANT DE TESTER L'INTEGRITE INTERFACE-UTILISATEUR DE DISPOSITIFS ACTIONNES PAR LA PAROLE

(30) Priority: 08.02.1999 US 246412
(43) Date of publication of application: 07.11.2001
(73) Proprietor: QUALCOMM INCORPORATED, San Diego, CA 92121-1714 (US)
(72) Inventor: DEJACO, Andrew, P., San Diego, CA 92131 (US); WALTERS, Richard, P., San Clemente, CA 92672 (US); GARUDADRI, Harinath, San Diego, CA 92129 (US)
(74) Representative: Dunlop, Hugh Christopher
(86) International application number: PCT/US2000/002905
(87) International publication number: WO 2000/046793

(56) References cited:
- US-A- 5 572 570
- US-A- 5 715 369

## Description

### BACKGROUND OF THE INVENTION

### I. Field of the Invention

The present invention pertains generally to the field of communications, and more specifically to testing user interface integrity of speech-enabled devices.

### II. Background

Voice recognition (VR) represents one of the most important techniques to endow a machine with simulated intelligence to recognize user or user-voiced commands and to facilitate human interface with the machine. VR also represents a key technique for human speech understanding. Systems that employ techniques to recover a linguistic message from an acoustic speech signal are called voice recognizers. The term "voice recognizer" is used herein to mean generally any spoken-user-interface-enabled device. A voice recognizer typically comprises an acoustic processor, which extracts a sequence of information-bearing features, or vectors, necessary to achieve VR of the incoming raw speech, and a word decoder, which decodes the sequence of features, or vectors, to yield a meaningful and desired output format such as a sequence of linguistic words corresponding to the input utterance. To increase the performance of a given system, training is required to equip the system with valid parameters. In other words, the system needs to learn before it can function optimally.

The acoustic processor represents a front-end speech analysis subsystem in a voice recognizer. In response to an input speech signal, the acoustic processor provides an appropriate representation to characterize the time-varying speech signal. The acoustic processor should discard irrelevant information such as background noise, channel distortion, speaker characteristics, and manner of speaking. Efficient acoustic processing furnishes voice recognizers with enhanced acoustic discrimination power. To this end, a useful characteristic to be analyzed is the short time spectral envelope. Two commonly used spectral analysis techniques for characterizing the short time spectral envelope are linear predictive coding (LPC) and filter-bank-based spectral modeling. Exemplary LPC techniques are described in U.S. Patent No. 5,414,796, which is assigned to the assignee of the present invention , and L.B. Rabiner & R.W. Schafer, *Digital Processing of Speech Signals* 396-453 (1978).

The use of VR (also commonly referred to as speech recognition) is becoming increasingly important for safety reasons. For example, VR may be used to replace the manual task of pushing buttons on a wireless telephone keypad. This is especially important when a user is initiating a telephone call while driving a car. When using a phone without VR, the driver must remove one hand from the steering wheel and look at the phone keypad while pushing the buttons to dial the call. These acts increase the likelihood of a car accident. A speech-enabled phone (i.e., a phone designed for speech recognition) would allow the driver to place telephone calls while continuously watching the road. And a hands-free car-kit system would additionally permit the driver to maintain both hands on the steering wheel during call initiation.

Speech recognition devices are classified as either speaker-dependent or speaker-independent devices. Speaker-independent devices are capable of accepting voice commands from any user. Speaker-dependent devices, which are more common, are trained to recognize commands from particular users. A speaker-dependent VR device typically operates in two phases, a training phase and a recognition phase. In the training phase, the VR system prompts the user to speak each of the words in the system's vocabulary once or twice so the system can learn the characteristics of the user's speech for these particular words or phrases. Alternatively, for a phonetic VR device, training is accomplished by reading one or more brief articles specifically scripted to cover all of the phonemes in the language. An exemplary vocabulary for a hands-free car kit might include the digits on the keypad; the keywords "call," "send," "dial," "cancel," "clear," "add," "delete," "history," "program," "yes," and "no"; and the names of a predefined number of commonly called coworkers, friends, or family members. Once training is complete, the user can initiate calls in the recognition phase by speaking the trained keywords. For example, if the name "John" were one of the trained names, the user could initiate a call to John by saying the phrase "Call John." The VR system would recognize the words "Call" and "John," and would dial the number that the user had previously entered as John's telephone number.

Speech-enabled products must be tested by hundreds of users, many times during the product development cycle and during the product validation phase, in order to test the integrity of the user interface and the application logic. A statistically significant, repeatable test of such magnitude is prohibitively expensive for the manufacturer to undertake. For this reason, many VR products undergo limited testing in the lab and extensive testing in the marketplace - i.e. by consumers.

US Patent No. 5 715 369 describes a speech recognition test system comprising a host processor and a memory device having a plurality of audio files. Upon a given start command, the next audio file on an audio file queue is opened for reading. The test application passes an input phrase to the speech recognition application which processes the audio data input, captures output from the speech recognition application and records the output in a test result file.

It would be desirable for manufacturers to provide consumers with fully tested VR products. Thus, there is a need for a low-cost, repeatable, non-intrusive testing paradigm for testing and improving speech-enabled products and speech-enabled services.

### SUMMARY OF THE INVENTION

The present invention is directed to a low-cost, repeatable, non-intrusive testing paradigm for testing and improving speech-enabled products and speech-enabled services. Accordingly, in one aspect of the invention, a device for testing and training a voice recogniser is provided, comprising means for storing a plurality of voiced utterances and means for testing the speech recogniser, which comprises means for receiving a prompt for a first operation from the speech recogniser, means for responding to the prompt for the first operation with a first selection from the plurality of voice utterances, means for providing an audio input to the speech recogniser corresponding to the first selection, and means for monitoring the speech recogniser for success of the first operation.

In another aspect of the invention, a method of testing and training a voice recogniser advantageously includes the steps of storing a plurality of voiced utterances and testing the speech recogniser, which comprises receiving a prompt for a first operation from the speech recogniser, responding to the prompt for the first operation with a first selection from the plurality of voice utterances, providing an audio input to the speech recogniser corresponding to the first selection, and monitoring the speech recogniser for success of the first operation.

### BRIEF DESCRIPTION OF THE DRAWINGS

Figure 1 is a block diagram of a conventional voice recognition system.
Figure 2 is a block diagram of a testing system for voice recognition systems such as the system of Figure 1.
Figure 3 is a flow chart illustrating method steps performed by a voice recognition system when the testing system of Figure 2 saves a voice entry into the voice recognition system.
Figure 4 is a flow chart illustrating method steps performed by a voice recognition system when the testing system of Figure 2 dials a voice entry in the voice recognition system.

### DETAILED DESCRIPTION OF THE PREFERRED EMBODIMENTS

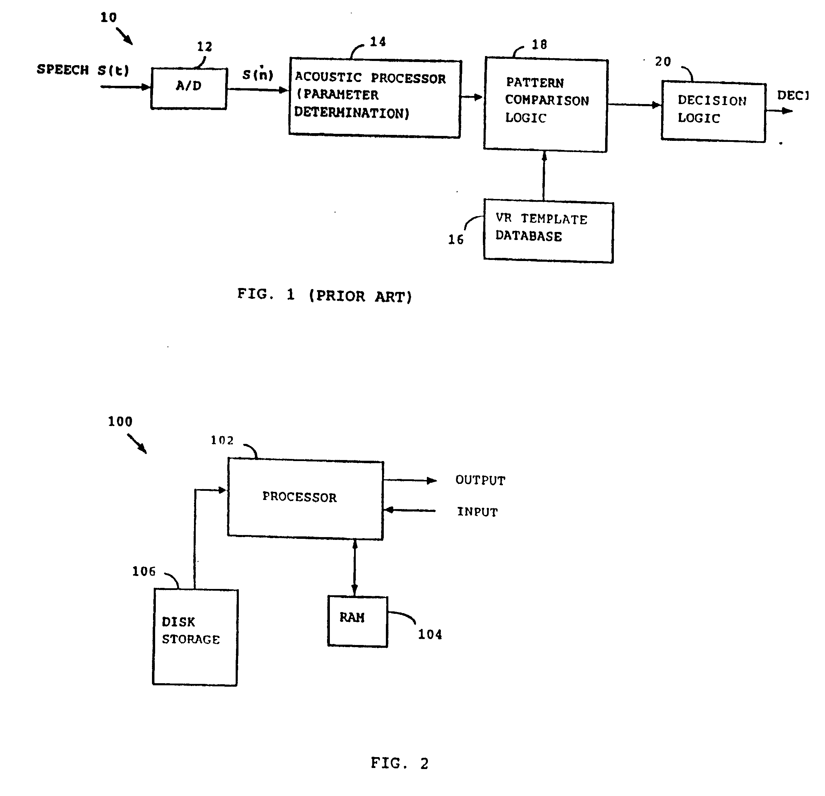

As illustrated in FIG. 1, a conventional voice recognition system 10 includes an analog-to-digital converter (A/D) 12, an acoustic processor 14, a VR template database 16, pattern comparison logic 18, and decision logic 20. The VR system 10 may reside in, e.g., a wireless telephone or a hands-free car kit.

When the VR system 10 is in speech recognition phase, a person (not shown) speaks a word or phrase, generating a speech signal. The speech signal is converted to an electrical speech signal s(t) with a conventional transducer (also not shown). The speech signal s(t) is provided to the A/D 12, which converts the speech signal s(t) to digitized speech samples s(n) in accordance with a known sampling method such as, e.g., pulse coded modulation (PCM).

The speech samples s(n) are provided to the acoustic processor 14 for parameter determination. The acoustic processor 14 produces a set of parameters that models the characteristics of the input speech signal s(t). The parameters may be determined in accordance with any of a number of known speech parameter determination techniques including, e.g., speech coder encoding and using fast fourier transform (FFT)-based cepstrum coefficients, as described in the aforementioned U.S. Patent No. 5,414,796. The acoustic processor 14 may be implemented as a digital signal processor (DSP). The DSP may include a speech coder. Alternatively, the acoustic processor 14 may be implemented as a speech coder.

Parameter determination is also performed during training of the VR system 10, wherein a set of templates for all of the vocabulary words of the VR system 10 is routed to the VR template database 16 for permanent storage therein. The VR template database 16 is advantageously implemented as any conventional form of nonvolatile storage medium, such as, e.g., flash memory. This allows the templates to remain in the VR template database 16 when the power to the VR system 10 is turned off.

The set of parameters is provided to the pattern comparison logic 18. The pattern comparison logic 18 advantageously detects the starting and ending points of an utterance, computes dynamic acoustic features (such as, e.g., time derivatives, second time derivatives, etc.), compresses the acoustic features by selecting relevant frames, and quantizes the static and dynamic acoustic features. Various known methods of endpoint detection, dynamic acoustic feature derivation, pattern compression, and pattern quantization are described in, e.g., Lawrence Rabiner & Biing-Hwang Juang, *Fundamentals of Speech Recognition* (1993). The pattern comparison logic 18 compares the set of parameters to all of the templates stored in the VR template database 16. The comparison results, or distances, between the set of parameters and all of the templates stored in the VR template database 16 are provided to the decision logic 20. The decision logic 20 selects from the VR template database 16 the template that most closely matches the set of parameters. In the alternative, the decision logic 20 may use a conventional "N-best" selection algorithm, which chooses the N closest matches within a predefined matching threshold. The person is then queried as to which choice was intended. The output of the decision logic 20 is the decision as to which word in the vocabulary was spoken.

The pattern comparison logic 18 and the decision logic 20 may advantageously be implemented as a microprocessor. The VR system 10 may be, e.g., an application specific integrated circuit (ASIC). The recognition accuracy of the VR system 10 is a measure of how well the VR system 10 correctly recognizes spoken words or phrases in the vocabulary. For example, a recognition accuracy of 95% indicates that the VR system 10 correctly recognizes words in the vocabulary ninety-five times out of 100.

In accordance with one embodiment, as shown in FIG. 2, a testing system 100 for VR products includes a processor 102, a software module 104, and a storage medium 106. The processor 102 is advantageously a microprocessor, but may be any conventional form of processor, controller, or state machine. The processor 102 is coupled to the software module 104, which is advantageously implemented as RAM memory holding software instructions. The RAM memory 104 may be on-board RAM, or the processor 102 and the RAM memory 104 could reside in an ASIC. In an alternate embodiment, firmware instructions are substituted for the software module 104. The storage medium 106 is coupled to the processor 102, and is advantageously implemented as a disk memory that is accessible by the processor 102. In the alternative, the storage medium 106 could be implemented as any form of conventional nonvolatile memory. Input and output connections allow the processor to communicate with a VR device (not shown) to be tested. The input and output connections advantageously comprise a cable that electrically couples the testing system 100 with the VR device. In addition to a cable, the input and output connections may include a digital-to-analog converter (D/A) (not shown) and a loudspeaker (also not shown), allowing the testing system 100 to communicate audibly with the VR device.

The testing system 100 simulates hundreds of speakers using a VR device, thereby providing an end-to-end, repeatable, non-intrusive test for VR devices. The storage medium 106 contains digital samples of a set of utterances, each utterance having been repeated by many different speakers. In one embodiment 150 words are spoken by each speaker, and 600 speakers are recorded, yielding 90,000 digital samples that are stored in the storage medium 106. The software instructions held in the software module 104 are executed by the processor 102 to anticipate the state of the VR device (which is received at the input connection) and provide an appropriate response via the output connection. The software instructions may advantageously be written in a scripting language. The cable from the output connection may advantageously interface with the VR device through a normal serial port, or diagnostic monitor port, of the VR device, and/or through a PCM port of the VR device. In one embodiment, in which the VR device is a wireless telephone, the serial port is used to command the VR device to emulate pressing buttons on a keypad of the telephone and to retrieve characters displayed on the LCD display of the telephone. In another embodiment, in which the VR device is a hands-free car kit (and an associated phone), the PCM port of the car kit is used to input speech to the car kit and to receive voice prompts and voice responses from the car kit. In another embodiment, the speech may be provided audibly to the VR device by means of a D/A and a loudspeaker. Hence, the testing system 100 appears to the VR device to be a human user, generating results in real time. Moreover, the software module 104 includes instructions to monitor the recognition accuracy of the VR device and report the recognition accuracy to the user.

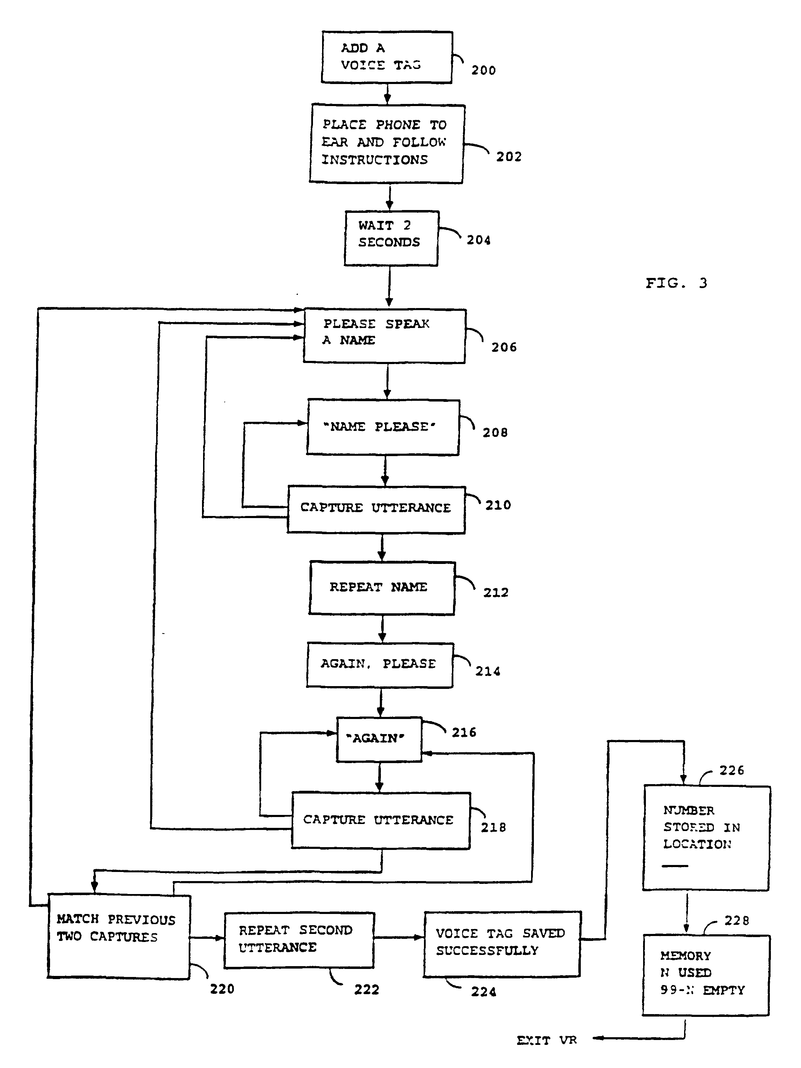

In one embodiment the user interface integrity of a VR device may be tested according to the method steps depicted in the flow chart of FIG. 3. Those skilled in the art would appreciate that the algorithm steps shown in FIG. 3, which are performed by a testing system (not shown), are tailored to a particular VR user interface being assumed. Other and different VR user interfaces could yield different algorithm steps. In accordance with the embodiment of FIG. 3, a voice entry is saved in a VR device (not shown) by a testing system that appears to the VR device to be a human user.

In step 200 the prompt "Add a Voice Tag?" is generated on the LCD screen of a VR device. This feature, which often is found in VR devices, allows a user to add a voice tag to a previously entered numeric telephone number, so that by saying the name corresponding to that number, the user can initiate dialing. The testing system receives the prompt and selects either "OK" to add the voice tag or "Next" to add another voice tag, through a cable electrically coupling the testing system to the diagnostic, or serial, port of the VR device.

In step 202 the command "Place Phone to Ear and Follow Instructions" appears on the LCD screen of the VR device and is received by the testing system. In step 204 the testing system waits two seconds, simulating the response time of a human user. In step 206 the command "Please Speak a Name" appears on the LCD screen of the VR device and is received by the testing system. In step 208 the VR device audibly generates the words "Name Please," followed by a beep.

In step 210 the testing system audibly generates a name taken from a stored database of names, and the VR device "captures" the utterance. The VR device may fail to capture the utterance, i.e., an error condition may occur. Error conditions include, e.g., more than two seconds elapsing before a name is spoken, the name spoken being too short, e.g., less than 280 msec in duration, or the name spoken being too long, e.g., greater than two seconds in duration. If the VR device fails to capture the utterance, the VR device repeats the prompt of step 208. If a predefined number of failures, N, occurs in succession, the VR devices aborts, returning to step 206.

If the VR device captures the utterance given in step 210, the VR device audibly generates the captured utterance in step 212. In step 214 the VR command "Again, Please" appears on the LCD screen of the VR device and is received by the testing system. In step 216 the VR device audibly generates the word "Again," followed by a beep.

In step 218 the testing system audibly repeats the name. If the VR device fails to capture the utterance, i.e., if an error condition occurs, the VR device repeats the prompt of step 216. If a predefined number of failures, N, occurs in succession, the VR devices aborts, returning to step 206.

If the VR device captures the utterance given in step 218, the testing system compares, or "matches," the two utterances captured in steps 210 and 218. If the two responses do not match, the second response is rejected and the VR device repeats the prompt of step 216. If a predefined number of failures, M, to match the two utterances occurs, the VR devices aborts, returning to step 206. The testing system records the number of failures in order to provide a user with an accuracy measure of the VR device.

If a successful match occurs, the VR devices audibly repeats the second captured utterance in step 222. In step 224 the words "Voice Tag Saved Successfully" appear on the LCD screen of the VR device and are received through the cable by the testing system. In step 226 the LCD screen of the VR device indicates that the number was stored in a particular memory location. In step 228 the LCD screen of the VR device indicates the number of memory locations used and the number of available memory locations. The VR device then exits VR mode.

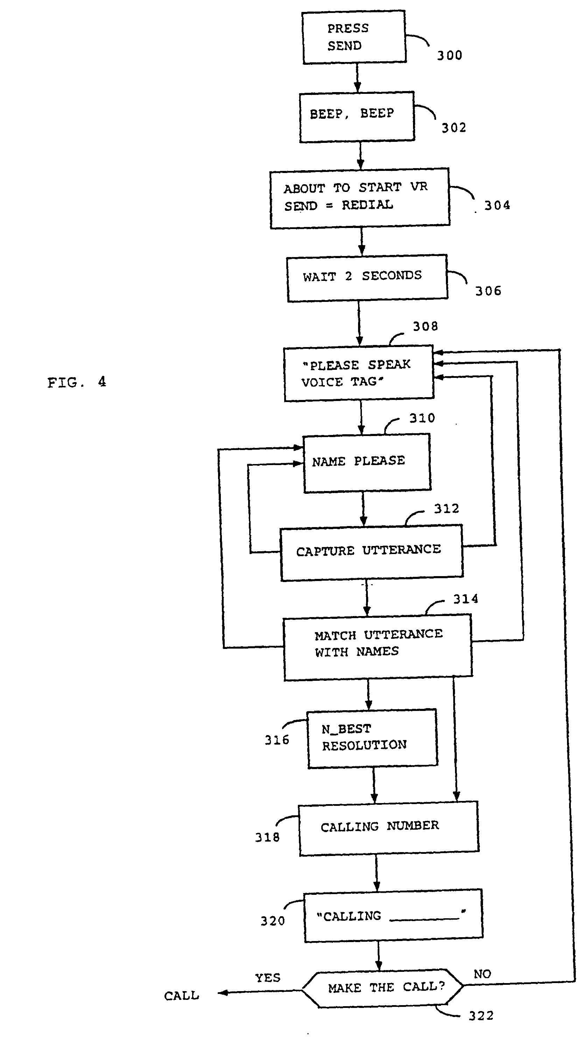

In one embodiment the user interface integrity of a VR device may be tested according to the method steps depicted in the flow chart of FIG. 4. Those skilled in the art would appreciate that the algorithm steps shown in FIG. 4, which are performed by a testing system (not shown), are tailored to a particular VR user interface being assumed. Other and different VR user interfaces could yield different algorithm steps. In accordance with the embodiment of FIG. 4, a voice entry is dialed in a VR device (not shown) by a testing system that appears to the VR device to be a human user.

In step 300 the testing system sends a command through a cable electrically coupling the testing system to the diagnostic, or serial, port of the VR device. The command simulates a human user pressing a SEND button on the VR device. In step 302 the VR device emits two audible beeps in succession. In step 304 the words "About to Start VR" and "Send = Redial" appear on the LCD screen of the VR device and are received by the testing system through the cable. The testing system has the option of selecting either "Redial" to redial a call or "VR" to enter VR mode, through the cable. The SEND key is used to initiate VR mode, which happens if the user does not perform any action for two seconds after pressing SEND. However, the user has the option of redialing the previously called number by pressing SEND again within two seconds of pressing it the first time. The VR device is indicating that VR mode is able to be started, but that the user can instead redial if he or she hits SEND again. In step 306 the testing system waits two seconds, simulating the response time of a human user.

In step 308 the testing system has selected "VR" through the cable and the VR device enters VR mode. The command "Please Speak Voice Tag" is generated on the LCD screen of the VR device and received by the testing system through the cable. In step 310 the VR device audibly generates the words "Name Please," followed by a beep.

In step 312 the testing system audibly generates a name taken from a stored database of names, and the VR device "captures" the utterance. The VR device may fail to capture the utterance, i.e., an error condition may occur. Error conditions include, e.g., more than two seconds elapsing before a name is spoken, the name spoken being too short, e.g., less than 280 msec in duration, or the name spoken being too long, e.g., greater than two seconds in duration. If the VR device fails to capture the utterance, the VR device repeats the prompt of step 310. If a predefined number of failures, N, occurs in succession, the VR devices aborts, returning to step 308.

In step 314 the VR device compares, or "matches," the captured utterance with every name on the list of names stored in the vocabulary of the VR device. If no match is found, the VR device repeats the prompt of step 310. If a predefined number of failures, M, to find a match occurs, the VR devices aborts, returning to step 308. The testing system records the number of failures in order to provide a user with an accuracy measure of the VR device.

If more than one match is found in step 314, the VR device proceeds to step 316, employing an n_best algorithm to resolve the match, as known in the art. With the n_best algorithm, the VR device allows the testing system to choose between a predefined number *n*, which is advantageously two, of matches selected from the vocabulary of names in the VR device. For example, the VR device audibly asks the testing system whether the testing system "said" the voice corresponding to the best match. The VR device also generates the same question on its LCD screen, along with the choices of selecting either YES or NO. The testing system receives this information through the cable and selects either YES or NO through the cable. If the testing system selects NO, the VR device repeats the questions, referencing the next-closest match. The process is continued until a match is chosen by the testing system, or until no match is chosen and the list of matches is exhausted, at which point the VR device would abort and repeat step 308.

After a successful match in either step 314 or step 316, the VR device proceeds to step 318. In step 318 the LCD screen of the VR device indicates that the VR device is calling the stored telephone number associated with the name. This indication is received by the testing system through the cable. In step 320 the VR device audibly indicates that it is calling the selected name.

In step 322 the VR device captures any utterance made by the testing system, which is typically silence. The testing system might also audibly generate the word "Yes" via a loudspeaker coupled to the testing system. Or the testing system could generate the word "No." If the VR device captures nothing, the call is made (i.e., silence is assumed). If the VR device captures an utterance that matches successfully with the word "Yes," which is stored in the vocabulary database of the VR device, the call is made. If, on the other hand, an error condition occurs, such as a too-long utterance or a too-short utterance being captured, the VR device questions whether the testing system wants the call to be made. If the VR device captures an utterance that matches successfully with a word other than "Yes," the VR device questions whether the testing system wants the call to be made. If the Testing system responds affirmatively, the call is made. If the testing system responds negatively, the VR device aborts, returning to step 308. The testing system could respond through the cable. In the alternative, or in addition, the testing system could respond audibly through the loudspeaker, in which case the response would have to be captured and matched in similar fashion to the methods described above.

In the embodiments described with reference to FIGS. 3-4, commands are sent from the testing system to the VR device through a cable electrically coupling the testing system to the diagnostic, or serial, port of the VR device. The commands are sent by the testing system. In another embodiment, a computer monitor may be coupled to testing system to display a graphical rendition of the user interface of the VR device, including the current display shown on the LCD screen of the VR device. Simulated buttons are provided on the monitor screen on which the user may mouse-click to send key-press commands to the VR device to simulate a user physically pressing the same buttons. Using the monitor, the user can control the VR device without actually touching it.

Thus, a novel and improved method and apparatus for testing user interface integrity of speech-enabled devices has been described. Those skilled in the art would understand that many other aspects of a VR user interface, such as, e.g., a voice memo feature, could be tested with the testing system described above. Those of skill in the art would understand that the various illustrative logical blocks and algorithm steps described in connection with the embodiments disclosed herein may be implemented or performed with a digital signal processor (DSP), an application specific integrated circuit (ASIC), discrete gate or transistor logic, discrete hardware components such as, e.g., registers and FIFO, a processor executing a set of firmware instructions, or any conventional programmable software module and a processor. The processor may advantageously be a microprocessor, but in the alternative, the processor may be any conventional processor, controller, microcontroller, or state machine. The software module could reside in RAM memory, flash memory, registers, or any other form of writable storage medium known in the art. Those of skill would further appreciate that the data, instructions, commands, information, signals, bits, symbols, and chips that may be referenced throughout the above description are advantageously represented by voltages, currents, electromagnetic waves, magnetic fields or particles, optical fields or particles, or any combination thereof.

Preferred embodiments of the present invention have thus been shown and described. It would be apparent to one of ordinary skill in the art, however, that numerous alterations may be made to the embodiments herein disclosed without departing from the scope of the invention. Therefore, the present invention is not to be limited except in accordance with the following claims.

## Claims

1. A device for testing and training a speech recogniser, comprising:
means for storing a plurality of voiced utterances;
means for testing the speech recogniser, which comprises:
means for receiving a prompt (206,308) for a first operation from the speech recogniser,
means (210,312) for responding to the prompt for the first operation with a first selection from the plurality of voice utterances,
means (210,312) for providing an audio input to the speech recogniser corresponding to the first selection, and
means (224,318) for monitoring the speech recogniser for success of the first operation.

2. The device of claim 1 for testing and training a speech-enabled device, comprising:
a processor (102);
a storage medium (106) coupled to the processor and storing a plurality of voiced utterances; and
a software module adapted for:
receiving a prompt for a first operation from the speech-enabled device, responding to the prompt for the first operation with a first selection,
providing an audio input to the speech-enabled device corresponding to the first selection, and
monitoring the speech-enabled device for success of the first operation.

3. The device of claim 2, wherein the software module is executable by the processor to produce at least one of the plurality of voiced utterances in accordance with the first operation.

4. The device of claim 2, further comprising a cable that couples the device to the speech recogniser.

5. The device of claim 2, wherein the speech recogniser comprises a wireless telephone.

6. The device of claim 2, wherein the speech recogniser comprises a wireless telephone coupled to a car kit.

7. The device of claim 2, wherein the software module is further executable by the processor to monitor the performance of the speech recogniser.

8. A method of testing and training a speech recogniser, comprising the steps of:
storing a plurality of voiced utterances; and
testing the speech recogniser, which comprises:
receiving (206,308) a prompt for a first operation from the speech recogniser, responding (210,312) to the prompt for the first operation with a first selection from the plurality of voice utterances,
providing (210,312) an audio input to the speech recogniser corresponding to the first selection, and
monitoring (224,318) the speech recogniser for success of the first operation.

9. The method of claim 8, wherein the providing step comprises producing at least one of the plurality of stored voiced utterances for interpretation by the speech recogniser.

10. The method of claim 8, wherein the providing step comprises electrically routing the stored samples to the speech recogniser.

11. The method of claim 8, wherein the speech recogniser comprises a wireless telephone.

12. The method of claim 8, wherein the speech recogniser comprises a wireless telephone coupled to a car kit.

13. The method of claim 8, further comprising the step of monitoring performance of the speech recogniser.

## Patentansprüche

1. Eine Vorrichtung zum Testen und Trainieren eines Spracherkenners, wobei Folgendes vorgesehen ist:
Mittel zum Speichern einer Vielzahl von gesprochenen Äußerungen bzw. Ausdrücken;
Mittel zum Testen des Spracherkenners, wobei Folgendes vorgesehen ist:
Mittel zum Empfangen einer Aufforderung bzw. eines Prompts (206,308) für einen ersten Betrieb vom Spracherkenner,
Mittel (210,312) zum Ansprechen auf den Prompt für den ersten Betrieb mit einer ersten Auswahl aus der Vielzahl von Sprachausdrücken,
Mittel (210,312) zum Liefern einer Audio-Eingangsgröße an den Spracherkenner entsprechend der ersten Auswahl, und
Mittel (224,318) zur Überwachung des Spracherkenners hinsichtlich des Erfolgs des ersten Betriebs.

2. Vorrichtung nach Anspruch 1 zum Testen und Trainieren einer sprachbetätigten Vorrichtung, wobei Folgendes vorgesehen ist:
ein Prozessor (102);
ein Speichermedium (106) gekoppelt an den Prozessor und zum Speichern einer Vielzahl von Sprachausdrücken; und
ein Softwaremodul, geeignet zum
Empfang eines Prompts für einen ersten Betrieb von der sprachbetätigten Vorrichtung,
Ansprechen auf den Prompt für den ersten Betrieb mit einer ersten Auswahl,
Vorsehen einer Audio-Eingangsgröße für die sprachbetätigte Vorrichtung entsprechend der ersten Auswahl, und
Überwachung der sprachbetätigten Vorrichtung hinsichtlich des Erfolgs des ersten Betriebs.

3. Vorrichtung nach Anspruch 2, wobei das Softwaremodul durch den Prozessor betreibbar ist, um mindestens eine der Vielzahl von Sprachausdrücken entsprechend dem ersten Betrieb zu erzeugen.

4. Vorrichtung nach Anspruch 2, wobei ferner ein Kabel vorgesehen ist, welches die Vorrichtung mit dem Spracherkenner koppelt.

5. Vorrichtung nach Anspruch 2, wobei der Spracherkenner ein drahtloses Telefon aufweist, bzw. ist.

6. Vorrichtung nach Anspruch 2, wobei der Spracherkenner ein drahtloses mit einem Automobileinbausatz gekoppeltes Telefon aufweist, bzw. ist.

7. Vorrichtung nach Anspruch 2, wobei das Softwaremodul ferner durch den Prozessor betreibbar ist, zur Überwachung der Leistungsfähigkeit oder Performance des Spracherkenners.

8. Ein Verfahren zum Testen und Trainieren eines Spracherkenners, wobei die folgenden Schritte vorgesehen sind:
Speichern einer Vielzahl von Sprachäußerungen bzw. von Sprachausdrücken; und
Testen des Spracherkenners, der Folgendes aufweist:
Empfangen (206,308) einer Aufforderung bzw. eines Prompts für einen ersten Betrieb vom Spracherkenner
Ansprechen (210,312) auf den Prompt für den ersten Betrieb mit einer ersten Auswahl aus der Vielzahl von Sprachausdrücken,
Vorsehen (210,312) einer Audioeingangsgröße für den Spracherkenner entsprechend der ersten Auswahl, und
Überwachen (224,318) des Spracherkenners hinsichtlich des Erfolgs des ersten Betriebs.

9. Verfahren nach Anspruch 8, wobei der Schritt des Vorsehens Folgendes aufweist: Erzeugen für die Interpretation durch den Spracherkenner mindestens eines Sprachausdrucks aus der Vielzahl von gespeicherten Sprachausdrücken.

10. Verfahren nach Anspruch 8, wobei der Schritt des Vorsehens Folgendes aufweist: Elektrisches Routen oder Leiten der gespeicherten Proben bzw. Muster zu dem Spracherkenner.

11. Verfahren nach Anspruch 8, wobei der Spracherkenner ein drahtloses Telefon aufweist bzw. ist.

12. Verfahren nach Anspruch 8, wobei der Spracherkenner ein drahtloses mit einem Automobileinbausatz gekoppeltes Telefon aufweist bzw. ist.

13. Verfahren nach Anspruch 8, wobei ferner der Schritt des Überwachens der Leistungsfähigkeit bzw. der Performance des Spracherkenners vorgesehen ist.

## Revendications

1. Dispositif pour tester et exercer un dispositif de reconnaissance de la parole, comprenant :
des moyens pour stocker une pluralité d'expressions orales ;
des moyens pour tester le dispositif de reconnaissance de la parole, qui comprennent :
des moyens pour recevoir une invite (206, 308) d'une première opération du dispositif de reconnaissance de la parole,
des moyens (210, 312) pour répondre à l'invite de la première opération avec une première sélection parmi la pluralité d'expressions orales,
des moyens (210, 312) pour fournir une entrée audio au dispositif de reconnaissance de la parole correspondant à la première sélection, et
des moyens (224, 318) pour surveiller le succès de la première opération du dispositif de reconnaissance de la parole.

2. Dispositif selon la revendication 1, pour tester et exercer un dispositif de reconnaissance de la parole, comprenant :
un processeur (102) ;
un support de stockage (106) relié au processeur et stockant une pluralité d'expressions orales ; et
un module logiciel conçu pour :
recevoir une invite d'une première opération du dispositif validé par la parole,
répondre à l'invite de la première opération avec une première sélection,
fournir une entrée audio au dispositif validé par la parole correspondant à la première sélection, et
surveiller le succès de la première opération du dispositif validé par la parole.

3. Dispositif selon la revendication 2, dans lequel le processeur exécute le module logiciel pour produire au moins l'une de la pluralité d'expressions orales selon la première opération.

4. Dispositif selon la revendication 2, comprenant en outre un câble qui relie le dispositif au dispositif de reconnaissance de la parole.

5. Dispositif selon la revendication 2, dans lequel le dispositif de reconnaissance de la parole comprend un téléphone sans fil.

6. Dispositif selon la revendication 2, dans lequel le dispositif de reconnaissance de la parole comprend un téléphone sans fil relié à un kit de voiture.

7. Dispositif selon la revendication 2, dans lequel le processeur exécute de plus le module logiciel pour surveiller les performances du dispositif de reconnaissance de la parole.

8. Procédé pour tester et exercer un dispositif de reconnaissance de la parole, comprenant les étapes consistant à :
stocker une pluralité d'expressions orales ; et à
tester le dispositif de reconnaissance de la parole, comprenant les étapes de :
réception (206, 308) d'une invite d'une première opération du dispositif de reconnaissance de la parole,
réponse (210, 312) à l'invite de la première opération avec une première sélection parmi la pluralité d'expressions orales,
fourniture (210, 312) d'une entrée audio au dispositif de reconnaissance de la parole correspondant à la première sélection, et de
surveillance (224, 318) du succès de la première opération du dispositif de reconnaissance de la parole.

9. Procédé selon la revendication 8, dans lequel l'étape de fourniture comprend au moins la production de l'une de la pluralité d'expressions orales stockées pour une interprétation par le dispositif de reconnaissance de la parole.

10. Procédé selon la revendication 8, dans lequel l'étape de fourniture comprend un acheminement électrique des échantillons stockés vers le dispositif de reconnaissance de la parole.

11. Procédé selon la revendication 8, dans lequel le dispositif de reconnaissance de la parole comprend un téléphone sans fil.

12. Procédé selon la revendication 8, dans lequel le dispositif de reconnaissance de la parole comprend un téléphone sans fil relié à un kit de voiture.

13. Procédé selon la revendication 8, comprenant en outre l'étape consistant à surveiller les performances du dispositif de reconnaissance de la parole.
